# EUROPEAN PATENT APPLICATION

(11) **EP 2 354 642 A2**
(43) Date of publication of application: **10.08.2011**
(21) Application number: 11152097.9
(22) Date of filing: 25.01.2011
(51) Int. Cl.: F21V 7/00, F21V 7/06, F21S 8/02

(54) **Reflector and lighting fixture with elliptic light distribution**

(30) Priority: 25.01.2010 JP 2010013167
(71) Applicant: Panasonic Electric Works Co., Ltd., Kadoma-shi Osaka 571-8686 (JP)
(72) Inventor: Ota, Tomohiro, Toyonaka Osaka (JP)
(74) Representative: Rüger, Barthelt & Abel Patentanwälte

(57) **Abstract**

The object is to provide a reflection plate and an illumination fixture capable of providing elliptic light distribution.
A reflection plate (11) and an illumination fixture includes: a first aperture (14) for permitting light from a light source to enter therefrom; a second aperture (15) for permitting the light to exit therefrom; and a reflection surface (16) provided over the first aperture (14) and the second aperture (15), wherein the first aperture (14) is formed with: first side parts (17) having a pair of first concave curves (18) arranged oppositely; and second side parts (19) arranged in a manner such as to cross each of the first side parts (17) and having a pair of second concave curves (20) arranged oppositely, and a dimension between both end parts of each of the second side parts (19) is larger than a dimension between both end parts of each of the first side parts (17), and the reflection surface (16) is a concavely curved surface.

## Description

### [Field of the Invention]

The present invention relates a reflection plate in an illumination fixture applied to an under-eaves ceiling light or the like with an LED as a light source, and also to the illumination fixture.

### [Background Art]

As one example of a conventional reflection plate and illumination fixture, there are those which include a light source at a rear aperture of a reflection plate (see, for example, Patent Literature 1).
As another example of the conventional reflection plate and the illumination fixture, there are those which include, at a front aperture of a lighting appliance provided with a light source, an inner lens for condensing reflection light from the reflection plate (see, for example, Patent Literature 2).

### [Conventional Technique Literature]

### [Patent Literature]

[Patent Literature 1] JP2007-311731 A (Fig. 1, claim 1)
[Patent Literature 2] JP-A-Heisei 10-269815 (Fig. 1, claim 1)

### [Disclosure of the Invention]

### [Problems to be solved by the Invention]

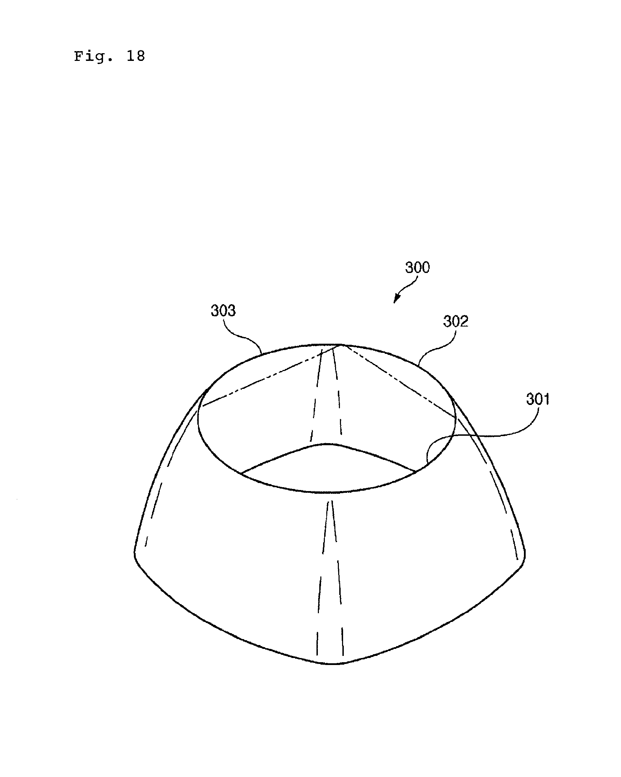

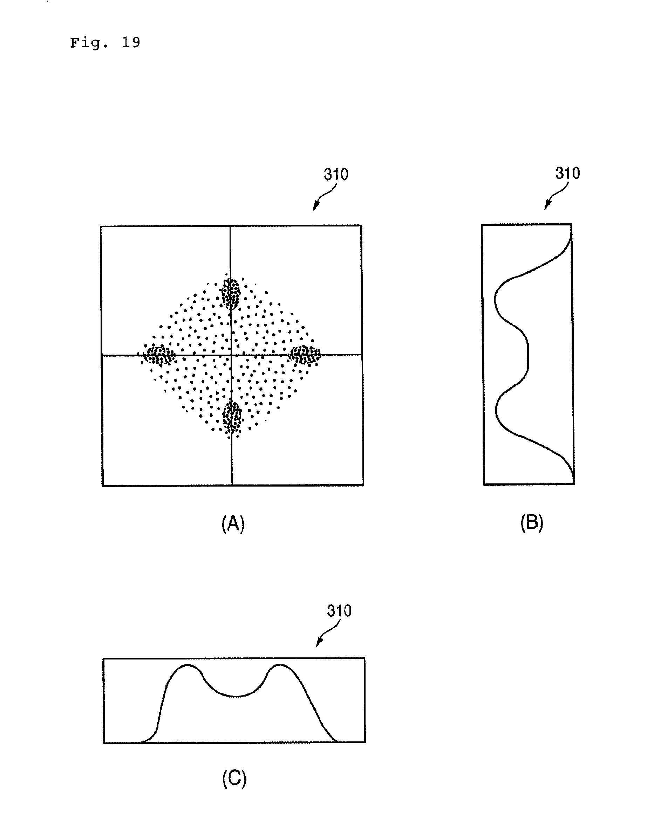

With the conventional reflection plate and illumination fixture disclosed in the Patent Literature 1 described above, almost all of light beams entering from the rear aperture of the reflection plate are adapted to exit from the front aperture to provide uniform illumination intensity of an irradiated surface. On the other hand, with the conventional reflection plate and illumination fixture disclosed in the Patent Literature 2 described above, light from the light source is condensed by the inner lens and then the condensed light is diffused by an outer lens to ensure high illumination intensity and achieve uniform dispersion.
Conventionally, the reflection plate has a structure as shown in Fig. 18. A reflection plate 300 shown in Fig. 18 has, at an aperture 301 on a side on which a light source is arranged, a first side 302 arranged vertically and a second side 303 having the same length as that of the first side 302 and arranged orthogonally to the first side 302. As shown in Figs. 19(A), 19(B), and 19(C), an illumination fixture 310 to which such a reflection plate 300 is applied has almost the same light distribution characteristics in vertical and horizontal directions.
Therefore, the conventional reflection plate 300 and the illumination fixture 310 cannot provide wide elliptic light distribution.
On the other hand, to provide elliptic light distribution, suggested is the one which has a plurality of lenses and a reflection plate combined with an LED and arranged in rows. However, such a conventional reflection plate and illumination fixture has no degree of freedom in the shape of the illumination fixture and thus has poor practicability.
Moreover, also suggested is the one which has a spread lens formed on a front surface of a lens, but as is the case with the case described above, such a conventional reflection plate and illumination fixture have poor feasibility due to remarkable deterioration in fixture efficiency of the illumination fixture.

The present invention has been made to solve the problem described above, and it is an object of the present invention to provide a reflection plate and an illumination fixture capable of providing elliptic light distribution.

### [Means adapted to solve the Problems]

A reflection plate according to the present invention includes: a first aperture for permitting light from a light source to enter therefrom; a second aperture for permitting the light to exit therefrom; and a reflection surface provided over the first aperture and the second aperture, wherein the first aperture is formed with: first side parts having a pair of first concave curves arranged oppositely; and second side parts arranged in a manner such as to cross each of the first side parts and having a pair of second concave curves arranged oppositely, and a dimension between both end parts of each of the second side parts is larger than a dimension between both end parts of each of the first side parts, and the reflection surface is a concavely curved surface.

In the present invention, the light from the light source enters from the pair of first concave curves arranged oppositely at the first side parts and from the pair of second concave curves crossing each of the first side parts and arranged oppositely at the second side parts at the first aperture where the dimension between the both end parts of each of the second side parts is larger than the dimension between the both end parts of each of the first side parts, and then the light is converted into reflection light by the reflection surface having a concavely curved surface .
Therefore, in the present invention, adjusting and setting the dimension between the both end parts of each first side part and the dimension between the both end parts of each second side part makes it possible to provide wide elliptic light distribution.

In the reflection plate according to the present invention, the reflection surface has a surface shape along a circular-arc line or a parabola.

In the present invention, the light from the light source is efficiently reflected by the surface shape of the reflection surface along the circular-arc line or the parabola.
Therefore, in the present invention, the light from the light source can be reflected without any waste.

An illumination fixture according to the present invention has the reflection plate described above.

In the present invention, the light from the light source enters from the first aperture of the reflection plate, where the dimension between the both end parts of each second side part is larger than the dimension between the both end parts of each first side part, and the light is then converted into reflection light by the reflection surface having a concavely curved surface.
Therefore, in the present invention, adjusting and setting the dimension between the both end parts of the first side part and the dimension between the both end parts of the second side part makes it possible to provide wide elliptic light distribution.

The illumination fixture according to the present invention includes, as the reflection plate, a plurality of reflection plates, wherein the reflection plates are arrayed in a manner such that opposing directions of the second side parts become parallel to each other.

In the present invention, wide elliptic light distribution can be provided by the plurality of reflection plates arrayed in a manner such that the opposing directions of the second side parts become parallel to each other.

The illumination fixture according to the present invention includes, as the reflection plate, a plurality of reflection plates, wherein the reflection plates are arrayed in a manner such that opposing directions of the first side parts are along radiation and opposing directions of the second side parts are along a side of a polygon.

In the present invention, polyangular light distribution can be provided by the plurality of reflection plates arrayed in a manner such that the opposing directions of the first side parts are along the radiation and the opposing directions of the second side parts are along the side of the polygon.

### [Effect of the Invention]

With a reflection plate and an illumination fixture of the present invention, light from a light source enters, into the first aperture where a dimension between both parts of each of second side parts is larger than a dimension between both parts of each of first side parts, from a pair of first concave curves arranged oppositely at the first side parts and from a pair of second concave curves crossing each of the first side parts and arranged oppositely at the second side parts, and the light is then converted into reflection light by the reflection surface having a concavely curved surface.
Therefore, the reflection plate and the illumination fixture of the present invention provides an effect that adjusting vertical and horizontal light distribution makes it possible to provide wide elliptic light distribution.

### [Brief Description of the Drawings]

[Fig.1] Fig.1 is an external perspective view of a reflection plate of a first embodiment according to the present invention, viewed obliquely from above.
[Fig.2] Fig.2 (A) is a front-direction light distribution characteristic diagram of an illumination fixture to which the reflection plate of Fig. 1 is applied, Fig.2 (B) is a vertical light distribution characteristic diagram of Fig.2 (A), and Fig.2 (C) is a horizontal light distribution characteristic diagram of Fig.2 (A).
[Fig. 3] Fig. 3 is an external perspective view of an illumination fixture of a second embodiment according to the present invention, viewed obliquely from below.
[Fig. 4] Fig. 4 is a pattern layout diagram of reflection plates in the illumination fixture of Fig. 3.
[Fig. 5] Fig. 5 (A) is a front-direction light distribution characteristic diagram of the illumination fixture to which the reflection plates of Fig. 3 are applied, Fig. 5 (B) is a vertical light distribution characteristic diagram of (A), and Fig. 5 (C) is a horizontal light distribution characteristic diagram of (A).
[Fig. 6] Fig. 6 is an external perspective view of an illumination fixture of a third embodiment according to the present invention, viewed obliquely from below.
[Fig. 7] Fig. 7 is a pattern layout diagram of reflection plates in the illumination fixture of Fig. 6.
[Fig. 8] Fig. 8 is an external perspective view of a first modified example of an illumination fixture according to the present invention, viewed obliquely from below.
[Fig. 9] Fig. 9 is a pattern layout diagram of reflection plates in a second modified example of the illumination fixture according to the present invention.
[Fig. 10] Fig. 10 is a pattern layout diagram of reflection plates in a third modified example of the illumination fixture according to the present invention.
[Fig. 11] Fig. 11 is a pattern layout diagram of reflection plates in a fourth modified example of the illumination fixture according to the present invention.
[Fig. 12] Fig. 12 is a pattern layout diagram of reflection plates in a fifth modified example of the illumination fixture according to the present invention.
[Fig. 13] Fig. 13 is a pattern layout diagram of reflection plates in a sixth modified example of the illumination fixture according to the present invention.
[Fig. 14] Fig. 14 is an external perspective view of reflection plates of the third embodiment according to the present invention, viewed obliquely from above.
[Fig. 15] Fig. 15 is a pattern layout diagram of reflection plates in an illumination fixture of Fig. 14.
[Fig. 16] Fig. 16 (A) is a front-direction light distribution characteristic diagram of an illumination fixture to which the reflection plates of Fig. 14 are applied, Fig. 16 (B) is a vertical light distribution characteristic diagram of Fig. 16 (A), and Fig. 16 (C) is a horizontal light distribution characteristic diagram of Fig. 16 (A).
[Fig. 17] Fig. 17 is a pattern layout diagram of reflection plates in a seventh modified example of the illumination fixture according to the present invention.
[Fig. 18] Fig. 18 is an external perspective view of a reflection plate of a conventional illumination fixture, viewed obliquely from above.
[Fig. 19] Fig. 19 (A) is a front-direction light distribution characteristic diagram of an illumination fixture to which the reflection plate of Fig. 18 is applied, Fig. 19 (B) is a vertical light distribution characteristic diagram of Fig. 19 (A), and Fig. 19 (C) is a horizontal light distribution characteristic diagram of Fig. 19 (A).

### [Best Mode for Carrying Out the Invention]

Hereinafter, reflection plates and an illumination fixture according to a plurality of embodiments of the present invention will be described referring to the accompanying drawings.

### (First Embodiment)

An illumination fixture 10 to which reflection plates 11 as a first embodiment of the present invention are applied includes in a fixture main body (not shown): a reflection plate body 12 forming a plurality of reflection plates 11; and an LED light emitting part 13, and this illumination fixture 10 is applied to an under-eaves ceiling light set on a ceiling construction surface.

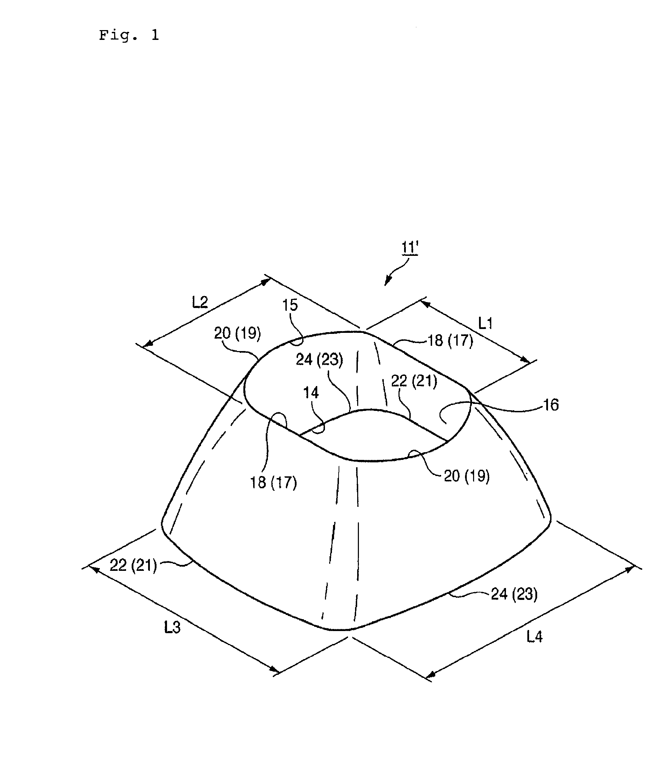

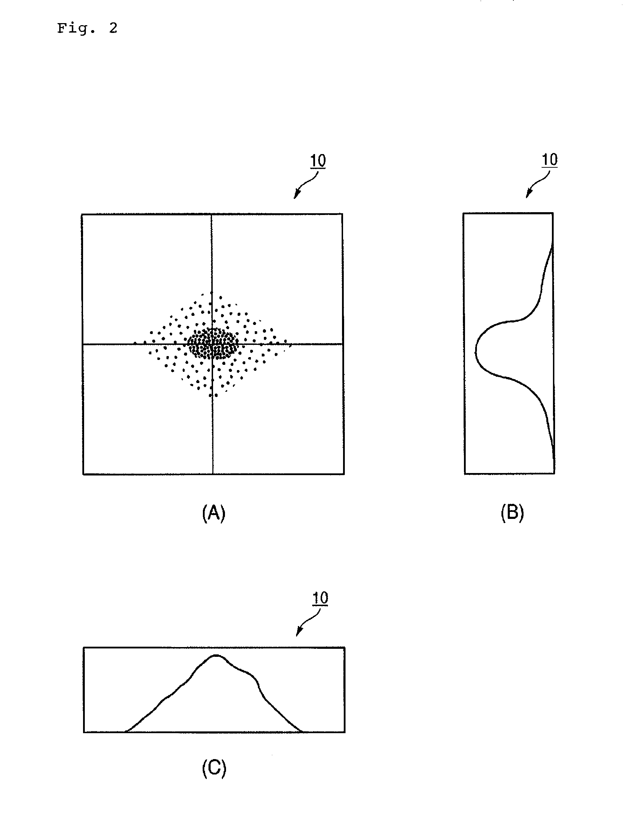

Figs. 1 and 2 illustrate a basic concept of the reflection plate and the illumination fixture according to the present invention, and as shown in Fig. 1, the reflection plate 11 of the first embodiment of the present invention includes: a first aperture 14 for permitting light from the LED light emitting part 13 to enter therefrom; and a second aperture 15 for permitting the light to exit therefrom, and also includes a reflection surface 16 having a concavely curved surface shape along a circular-arc line or a parabola over the first aperture 14 and the reflection surface 15. The reflection surface 16 is a metal-evaporated surface of aluminum or the like.

The first aperture 14 is formed of: first side parts 17 having a pair of first concave curves 18 arranged oppositely; and second side parts 19 so arranged as to cross each of the first side parts 17 and having a pair of second concave curves 20 arranged oppositely, and a dimension L2 between both end parts of each of the second side parts 19 is set larger than a dimension L1 between both end parts of each first side part 17. Each first side part 17 and each second side part 19 are connected together with a curved surface.
The second aperture 15 is formed into a shape similar to that of the first aperture 14, and formed of: first side parts 21 having a pair of first concave curves 22 arranged oppositely; and second side parts 23 so arranged as to cross each of the first side parts 21 and having a pair of second concave curves 24 arranged oppositely, and a dimension L4 between both end parts of each of the second side parts 23 is set larger than a dimension L3 between both end parts of each first side part 21. Each first side part 21 and each second side part 23 are connected together with a curved surface.

Next, a light distribution characteristic of the illumination fixture 10 to which the reflection plates 11 is applied will be described. As shown in Figs. 2(A), 2(B), and 2(C), front-direction light distribution of the illumination fixture 10 is longer in a horizontal direction than in a vertical direction. This is because the dimension L2 between the both end parts of each second side part 19 is set larger than the dimension L1 between the both end parts of each first side part 17 at the first aperture 14 and the dimension L4 between the both end parts of each second side part 23 is set larger than the dimension L3 between the both end parts of each first side part 21 at the second aperture 15.

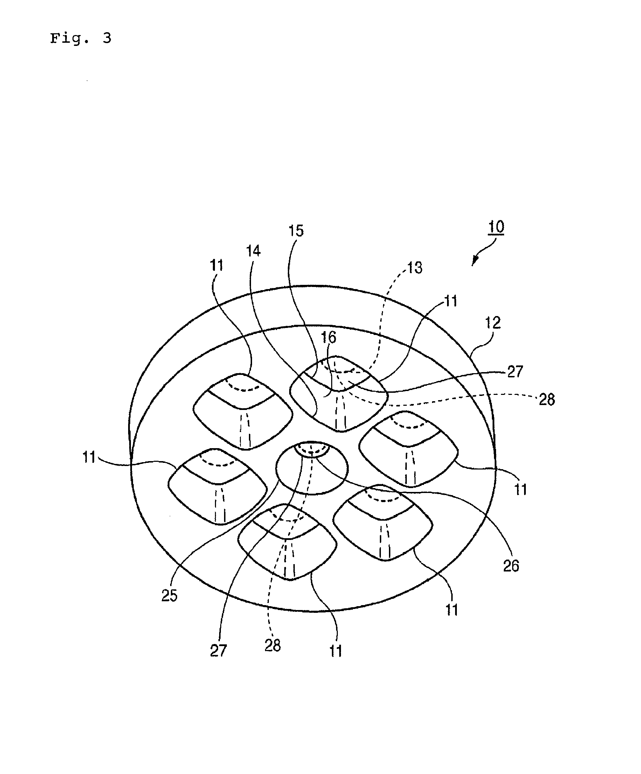

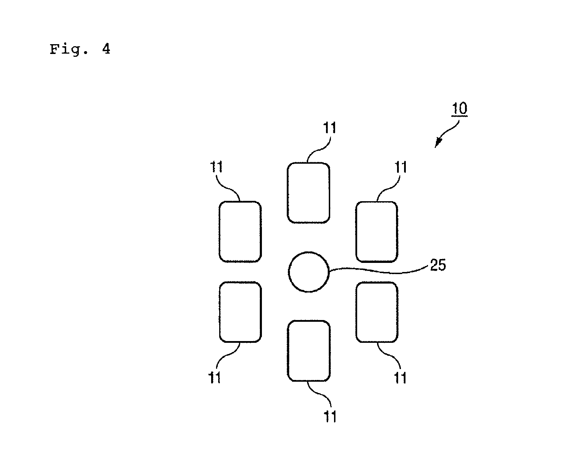

As shown in Fig. 3, the illumination fixture 10 has a single reflection plate 25 of a circular shape at a central portion on a bottom surface of the reflection plate body 12 of a circular-disc shape, and has six reflection plates 11 arrayed around the reflection plate 25 in a manner such that opposing directions of the second side parts 19 of the first apertures 14 and the second side parts 23 of the second apertures 15 become parallel to each other. The LED light emitting part 13 includes an LED 28 assembled on the first aperture 14 side of the reflection plate 11 and a first aperture 26 side of the reflection plate 25 with a lens 27 therebetween.
As shown in Fig. 4, the illumination fixture 10 has six reflection plates 11 with the second side parts 19 of the first apertures 14 and the second side parts 23 of the second apertures 15 arrayed vertically. Alternatively, the illumination fixture 10 may have six reflection plates 11 with the second side parts 19 of the first aperture 14 and the second side parts 23 of the second apertures 15 arrayed horizontally.

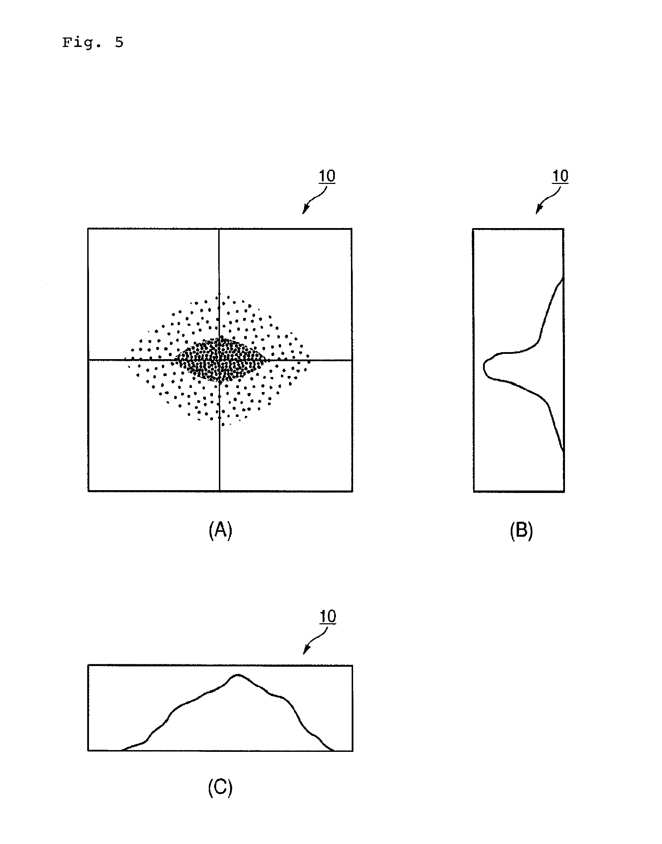

As shown in Figs. 5(A), 5(B), and 5(C), front-direction light distribution of the illumination fixture 10 having the six reflection plates 11 with each second side part 19 of the first aperture 14 and each second side part 23 of the second aperture 15 arrayed horizontally is longer in a horizontal direction than in a vertical direction. This is because the dimension L2 between the both end parts of each second side part 19 is set larger than the dimension L1 between the both end parts of each first side part 17 at the first aperture 14 and the dimension L4 between the both end parts of each second side part 23 is set larger than the dimension L3 between the both end parts of each first side part 21 at the second aperture 15.

In the reflection plate 11 of the first embodiment of the present invention, light from the LED 28 enters into the first aperture 14, where the dimension between the both end pats of each second side part 19 is larger than the dimension between the both end parts of each first side part 17, from the pair of first concave curves 18 arranged oppositely at the first side parts 17 and from the pair of second concave curves 20 crossing each first side part 17 and arranged oppositely at the second side parts 19, and then is converted into reflected light by the reflection surface 16 having a concavely curved surface.
Therefore, by adjusting and setting the dimension between the both end parts of the first side part 17 and the dimension between the both end parts of the second side part 19, the reflection plate 11 of the first embodiment of the present invention can provide wide elliptic light distribution.

With the reflection plate 11 of the first embodiment of the present invention, the light from the LED 28 is efficiently reflected by the surface shape along the circular-arc line or the parabola of the reflection surface 16.
Therefore, the reflection plate 11 of the first embodiment of the present invention can reflect the light from the LED 28 without any waste.

In the illumination fixture 10 of the first embodiment of the present invention, the light from the LED 28 enters from the first aperture 14 of the reflection plate 11, where the dimension between the both end parts of each second side part 19 is larger than the dimension between the both end parts of each first side part 17 and is then converted into reflected light by the reflection surface 16 having a concavely curved surface.
Therefore, the illumination fixture 10 of the first embodiment of the present invention can perform irradiation with the wide elliptic light distribution by adjusting and setting the dimension between the both end parts of the first side part 17 and the dimension between the both end parts of the second side part 19.

The illumination fixture 10 of the first embodiment the present invention can provide wide elliptic light distribution with the plurality of reflection plates 11 arrayed in a manner such that the opposing directions of the second side parts 19 become parallel to each other.

### (Second Embodiment)

Next, an illumination fixture of a second embodiment of the present invention will be described. Note that in each of the embodiments below, components overlapping with those of the first embodiment described above and functionally similar components are provided with the same numerals or corresponding numerals in the figures to thereby simplify or omit their description.

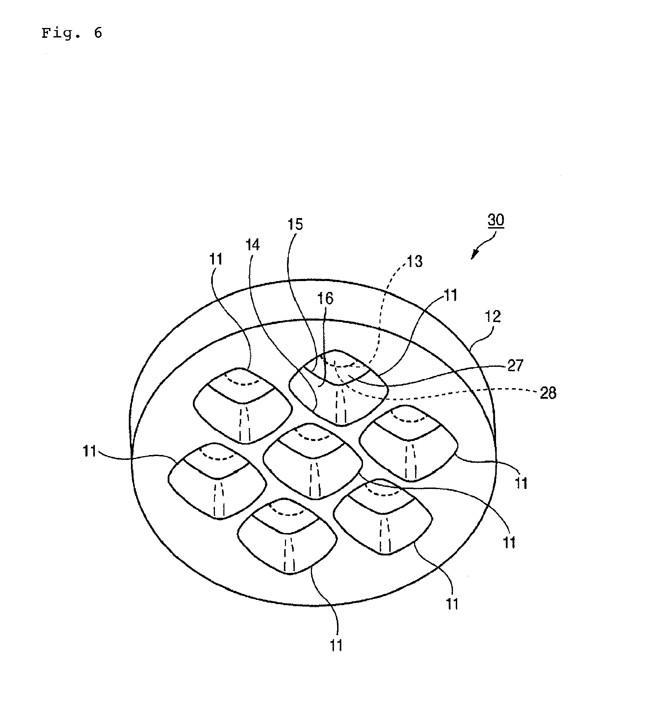

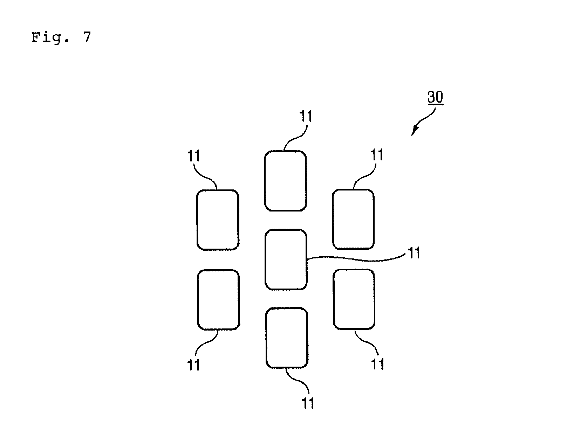

As shown in Figs. 6 and 7, the illumination fixture 30 of the second embodiment of the present invention has one reflection plate 11 arranged at a central portion on a bottom surface of a reflection plate body 12 of a circular shape, and has around the reflection plate 11 at the central portion six reflection plates 11 arrayed in a manner such that opposing directions of the second side parts 19 of the first apertures 14 and the second side parts 23 of the second apertures 15 become parallel to each other.

The illumination fixture 30 of the second embodiment of the present invention provides an effect similar to that of the first embodiment. Especially according to this embodiment, the arrangement of the reflection plate 11 at the central portion of the reflection plate body 12 makes it possible to provide totally well-balanced elliptic light distribution.

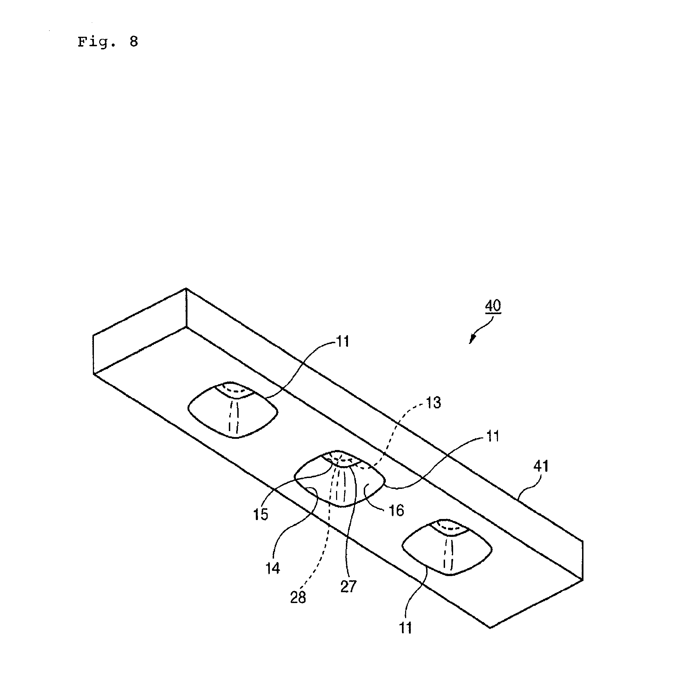

Next, modified examples of the reflection plates and the_illumination fixture of the present invention will be described.
As shown in Fig. 8, the illumination fixture 40 of the first modified example has a plurality of reflection plates 11 arrayed on a bottom surface of a reflection plate body 41 of a square plate-like shape in a manner such that opposing directions of the second side parts 19 of the first apertures 14 and the second side parts 23 of the second apertures 15 are aligned along a longitudinal direction of the reflection plate body 41.

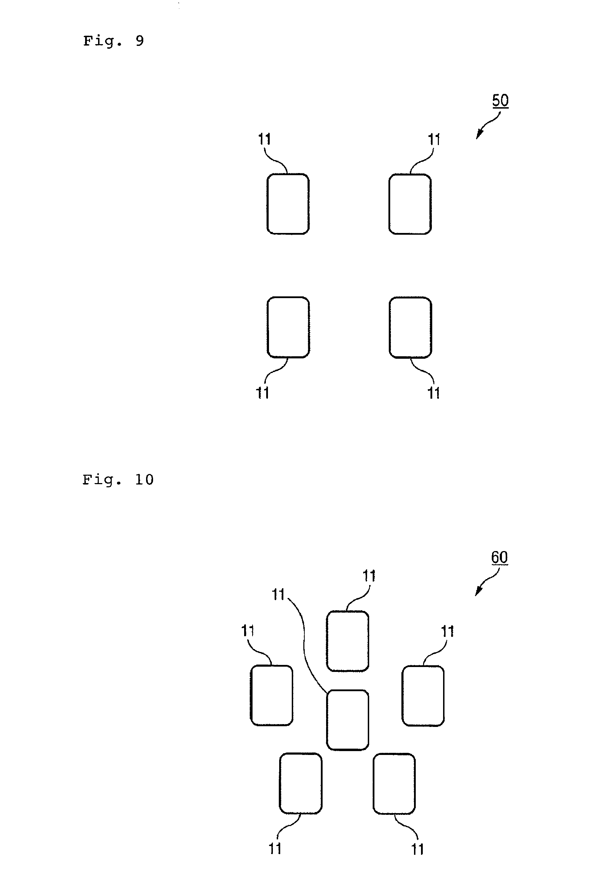

As shown in Fig. 9, the illumination fixture 50 of the second modified embodiment has four reflection plates 11 arrayed in a manner such that opposing directions of the second side parts 19 of the first apertures 14 and the second side parts 23 of the second apertures 15 become parallel to each other.

As shown in Fig. 10, the illumination fixture 60 of the third modified embodiment has one reflection plate 11 arranged at a central portion thereof, and has around the reflection plate 11 at the central portion five reflection plates 11 arrayed in a manner such that opposing directions of the second side parts 19 of the first apertures 14 and the second side parts 23 of the second apertures 15 become parallel to each other.

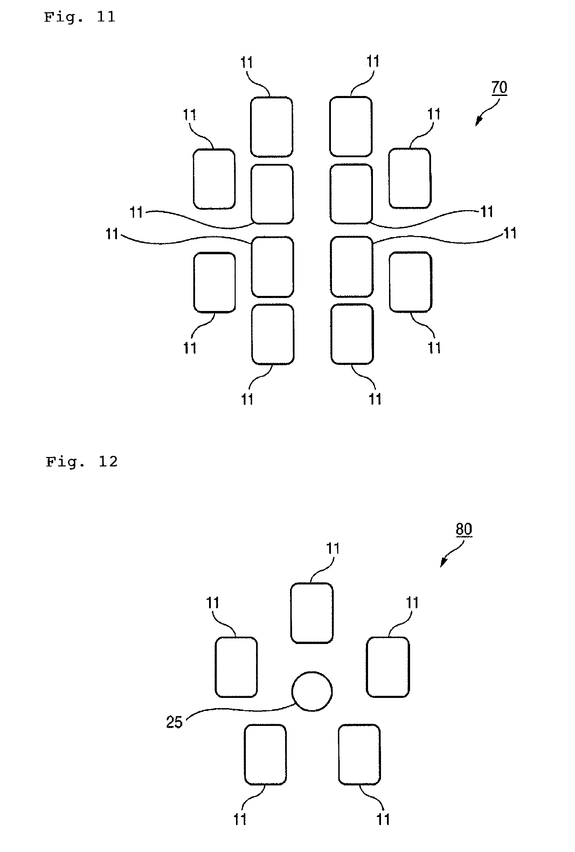

As shown in Fig. 11, the illumination fixture 70 of the fourth modified embodiment has, around four reflection plate 11 arrayed at a central portion thereof in a manner such that opposing directions of the second side parts 19 of the first apertures 14 and the second side parts 23 of the second apertures 15 become parallel to each other, eight reflection plates 11 similarly arrayed in a manner such that opposing directions of the second side parts 19 of the first apertures 14 and the second side parts 23 of the second apertures 15 become parallel to each other.

As shown in Fig. 12, the illumination fixture 80 of the fifth modified embodiment has a reflection plate 25 of a circular shape arranged at a central portion thereof, and has five reflection plates 11 arrayed around the reflection plate 25 at the central portion in a manner such that the opposing directions of the second side parts 19 of the first apertures14 and the second side parts23 of the second apertures15 become parallel to each other.

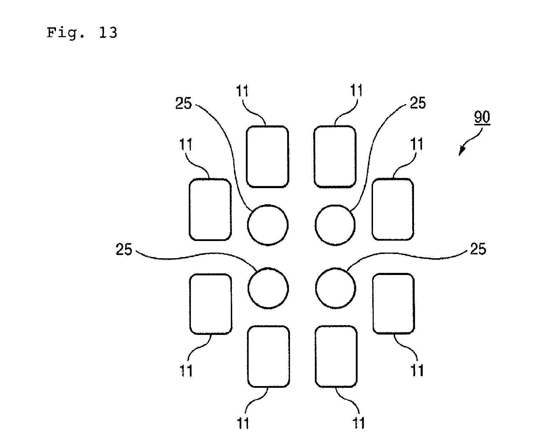

As shown in Fig. 13, the illumination fixture 90 of the sixth modified example has four reflection plates 25 of a circular shape arranged at a central portion thereof, and has around the four reflection plates 25 at the central portion eight reflection plates 11 arrayed in a manner such that opposing directions of the second side parts 19 of the first apertures 14 and the second side parts 23 of the second apertures 15 become parallel to each other.

### [Third Embodiment]

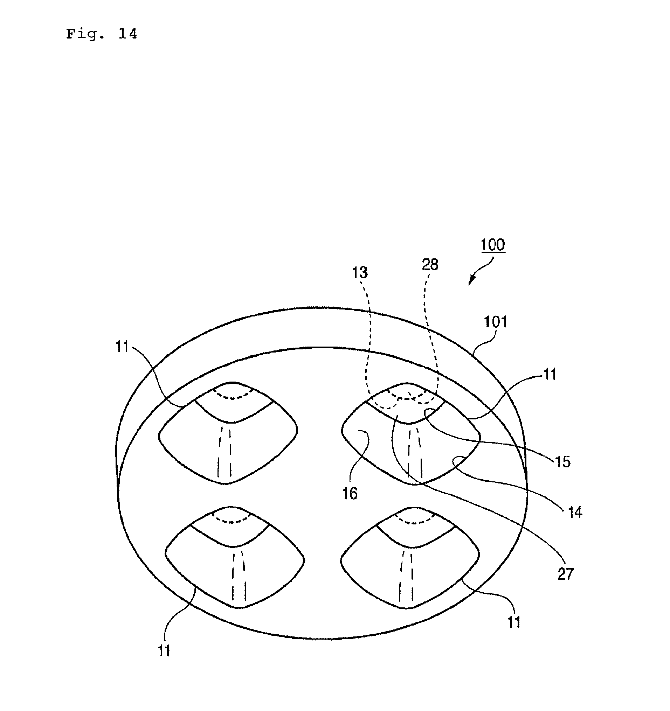

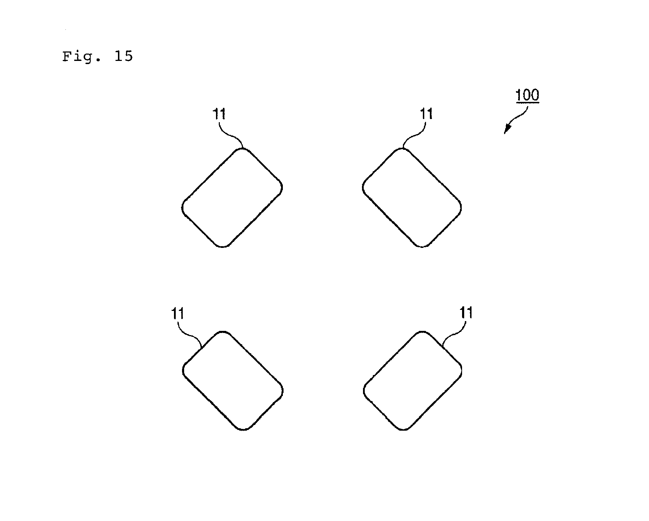

Next, a reflection plate and an illumination fixture of a third embodiment of the present invention will be described.
As shown in Figs. 14 and 15, the illumination fixture 100 of the third embodiment of the present invention has, on a bottom surface of a reflection plate body 101 of a circular-disc shape, four reflection plates 11 arrayed in a manner such that opposing directions of the first side parts 17 are along radiation and opposing directions of the second side parts 19 are along a side of a polygon.

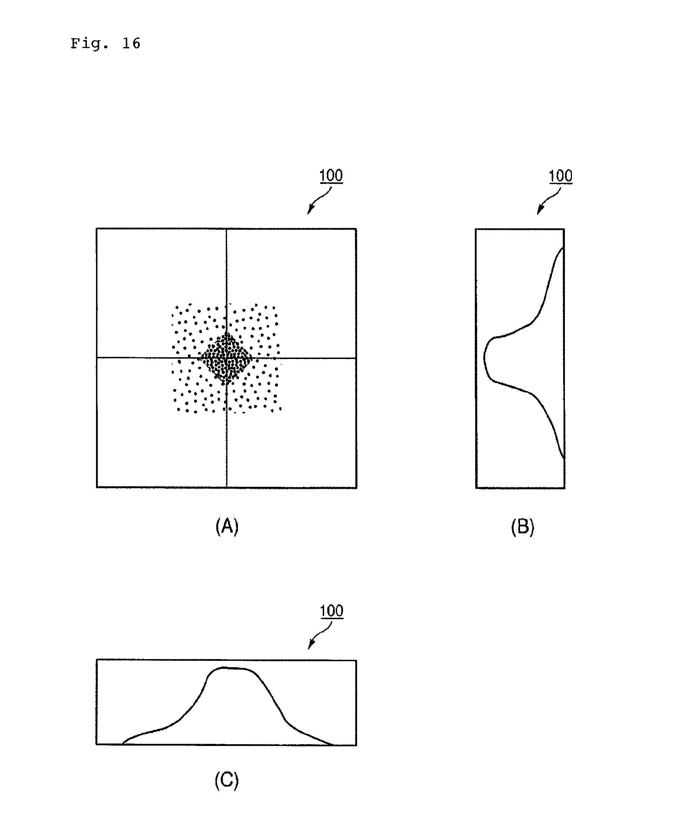

As shown in Figs. 16(A), 16(B), and 16(C), front-direction light distribution of the illumination fixture 100 having the four reflection plates 11 arrayed in a manner such that the opposing directions of the first side parts 17 are along the radiation and the opposing directions of the second side parts 19 are along the side of the polygon is polyangular light distribution in accordance with the array of the four reflection plates 11.

With the illumination fixture 100 of the third embodiment, the polyangular light distribution can be provided by the four reflection plates 11 arrayed in a manner such that the opposing directions of the first side parts 17 are along the radiation and the opposing directions of the second side parts 19 are along the side of the polygon.

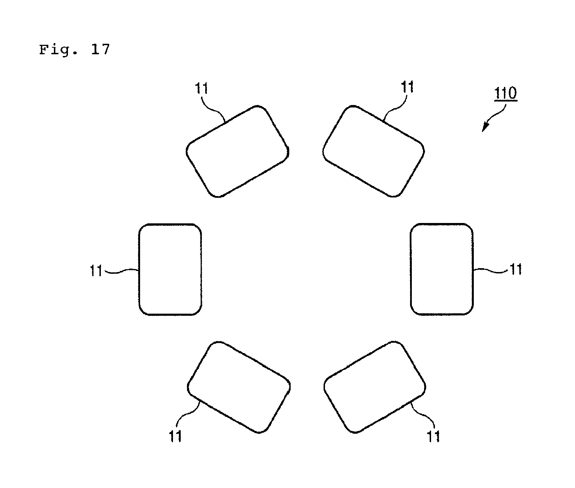

As shown in Fig. 17, the illumination fixture 110 of the seventh modified example has six reflection plates 11 arrayed in a manner such that the opposing directions of the first side parts 17 are along radiation and the opposing directions of the second side parts 19 are along a side of a polygon.

The LED light emitting part 13, the lens 27, the LED 28, etc. used in the embodiments described above are not limited to those illustrated but may be modified as appropriate.

### [Description of Reference Numerals]

- 10, 30, 40, 50, 60, 70, 80, 90, 100, 110: Illumination fixture
- 11: Reflection plate
- 14: First aperture
- 15: Second aperture
- 16: Reflection surface
- 17: First side part
- 18: First concave curve
- 19: Second side part
- 20: Second concave curve
- 28: LED (light source)

## Claims

1. A reflection plate comprising:
a first aperture for permitting light from a light source to enter therefrom;
a second aperture for permitting the light to exit therefrom; and
a reflection surface provided over the first aperture and the second aperture,
wherein
the first aperture is formed with: first side parts having a pair of first concave curves arranged oppositely; and second side parts arranged in a manner such as to cross each of the first side parts and having a pair of second concave curves arranged oppositely, and a dimension between both end parts of each of the second side parts is larger than a dimension between both end parts of each of the first side parts, and
the reflection surface is a concavely curved surface.

2. The reflection plate according to claim 1, wherein
the reflection surface has a surface shape along a circular-arc line or a parabola.

3. An illumination fixture having the reflection plate according to either of claims 1 and 2.

4. The illumination fixture according to claim 3, comprising, as the reflection plate, a plurality of reflection plates, wherein
the reflection plates are arrayed in a manner such that opposing directions of the second side parts become parallel to each other.

5. The illumination fixture according to claim 3, comprising, as the reflection plate, a plurality of reflection plates, wherein
the reflection plates are arrayed in a manner such that opposing directions of the first side parts are along radiation and opposing directions of the second side parts are along a side of a polygon.
